# EUROPÄISCHE PATENTANMELDUNG

(11) **EP 3 106 395 A2**
(43) Veröffentlichungstag der Anmeldung: **21.12.2016**
(21) Anmeldenummer: 16170905.0
(22) Anmeldetag: 23.05.2016
(51) Int. Cl.: B65B 1/00

(54) **VERPACKUNGSANLAGE UND EIN VERFAHREN ZUM VERPACKEN EINES PRODUKTS IN EINE MEHRZAHL AN SÄCKEN ODER BEUTEL**

(30) Priorität: 15.06.2015 DE 102015210974
(71) Anmelder: Windmöller & Hölscher KG, 49525 Lengerich (DE)
(72) Erfinder: Hawighorst, Thomas, 49525 Lengerich (DE); Hohenbrink, Martin, 49525 Lengerich (DE); Narberhaus, Daniel, 49525 Lengerich (DE)

(57) **Zusammenfassung**

Die Erfindung beschreibt eine Verpackungsanlage (100) zum Verpacken eines Produkts mit wenigstens einer der folgenden Vorrichtungen: Absackvorrichtung (110), Palettiervorrichtung (120), Palettensicherungsvorrichtung (130). Es ist eine Einrichtung zum Bestimmen und Bereitstellen von Informationen zu zukünftigen Ereignissen vorgesehen.

## Beschreibung

Die Erfindung betrifft eine Verpackungsanlage und ein Verfahren zum Verpacken eines Produkts in eine Mehrzahl an Säcken oder Beutel.

In einer solchen Verpackungsanlage werden oft größere Mengen eines Produkts, welches insbesondere schütt-, riesel- oder fliesfähig ist, in transportfähige Mengen verpackt.

Eine solche Verpackungsanlage ist auf einer größeren Fläche aufgestellt, so dass der Bediener nur schwierig die komplette Anlage stets im Blick haben kann. Insbesondere Alarme können übersehen werden. Auch die Bedienung der kompletten Anlage ist aufgrund der räumlichen Entfernungen zeitraubend und damit schwierig.

Die Aufgabe der vorliegenden Erfindung ist es daher, eine Verpackungsanlage und ein Verfahren zum Verpacken eines Produkts in eine Mehrzahl an Säcken oder Beutel derart weiterzubilden, dass sie einfacher und trotz der Größe schneller bedient werden kann.

Die Aufgabe wird durch die Merkmale der Ansprüche 1 und 6 gelöst. In den angegebenen Unteransprüchen sind weitere Ausgestaltungen der erfindungsgemäßen Verpackungsanlage und des erfindungsgemäßen Verfahrens angeben, wobei die Merkmale, die im Zusammenhang mit der erfindungsgemäßen Verpackungsanlage angegeben sind, auch in Verbindung mit dem erfindungsgemäßen Verfahren gebracht werden können und umgekehrt, so dass stets wechselseitig auf die jeweiligen Merkmale zurückgegriffen werden kann bzw. wird.

Gemäß der Erfindung kann die Verpackungsanlage eine Absackvorrichtung umfassen, in welcher das Produkt, welches oft in einem Silo vorgehalten wird, in einzelne Säcke oder Beutel abgesackt wird. Solche Vorrichtungen werden Form-, Füll- und Schließmaschinen genannt, da aus schlauchförmigem Material einzelne, oben offene Säcke erzeugt werden, die in der Vorrichtung zusätzlich auch mit dem Produkt befüllt und am oberen, offenen Ende verschlossen werden.

Erfindungsgemäß kann die Verpackungsanlage eine Vorrichtung zum Palettieren einer Mehrzahl von mit dem Produkt befüllten Säcken oder Beutel umfassen, wobei mehrere, in der Regel nacheinander zugeführte Säcke zu einer Lage zusammengefasst und angeordnet werden. Mehrere solcher Lagen werden sukzessive auf einer Palette aufgeschichtet, bis eine gewünschte Höhe erreicht ist.

Eine erfindungsgemäße Verpackungsanlage kann eine Ladungssicherungsvorrichtung zum Sichern von mit Säcken beladenen Paletten (Palettensicherungsvorrichtung) umfassen, wobei in der Regel die mit Säcken beladene Palette mit einem Kunststofffolienüberzug (Stretchhaube) versehen wird oder mit einer Folie, insbesondere einer Stretchfolie eingewickelt wird. Eine derart gesicherte Palette ist nun in der Regel transportfähig.

Die Erfindung umfasst nun eine dieser Vorrichtungen oder eine beliebige Kombination hiervon.

Gemäß der vorliegenden Erfindung ist eine Einrichtung zum Bestimmen und Bereitstellen von Informationen zu zukünftigen Ereignissen vorgesehen. Wenn ein Bediener frühzeitig oder zumindest rechtzeitig auf die zukünftigen Ereignisse hingewiesen wird, so kann er zum passenden Zeitpunkt auf dieses Ereignis reagieren. Damit kann beispielsweise vermieden werden, dass die Verpackungsanlage in einen Stillstandszustand gerät, wenn der Bediener nicht auf das Ereignis vorbereitet ist. Die Einrichtung zum Bestimmen und Bereitstellen von Informationen kann dabei in der Vorrichtung integriert sein und eine Rechen- und Speichervorrichtung umfassen. Die Einrichtung kann zudem ein Bedien- und Informationssystem umfassend, mit welcher Informationen zu Ereignissen darstellbar sind, so dass dem Bediener die Informationen zugänglich sind. Neben Informationen zu zukünftigen Ereignissen können auch Informationen zu vergangenen Ereignissen, die vorteilhafterweise in der Speichervorrichtung gespeichert sind, angezeigt werden. Die Informationen zu vergangenen Ereignissen sind dabei auch von der Rechenvorrichtung aus der Speichervorrichtung abrufbar und auswertbar, wobei die Rechenvorrichtung dazu eingerichtet ist, diese Informationen zu vergangenen Ereignissen zu kombinieren und zu Informationen zu zukünftigen Ereignissen zu verarbeiten. Diese Informationen sind dann vorzugsweise mittels eines Endgeräts, welches Bestandteil der Vorrichtung oder aber außerhalb der Vorrichtung angeordnet sein kann, darstellbar. Zudem ist mit dem Endgerät eine Reaktion des Bedieners abfragbar. Das Endgerät umfasst dazu bevorzugt eine Anzeigevorrichtung wie etwa einen Bildschirm, mit welcher dem Bediener die Informationen zu zukünftigen Ereignissen übermittelbar sind.

In einer vorteilhaften Ausführungsform der Erfindung sind die zukünftigen Ereignisse verschiedene Aufgaben, die zumindest ein Bediener der Vorrichtung zu erledigen hat. Zu diesen Aufgaben können verschiedene Wartungsaufgaben sein, wie etwa die Reinigung der Vorrichtung, die Kontrolle der Vorrichtung oder das Nachfüllen von Schmier- oder anderen Betriebsmitteln. Andere Aufgaben können sich auf das abzusackende Produkt oder die Verpackungsmittel beziehen, wobei beispielsweise ein notwendiger Wechsel der Packmittelrollen, insbesondere der Wechsel der schlauchförmigen Folie, aus welcher die Säcke herstellbar sind, anzeigbar ist. Auch ein bevorstehendes Jobende ist anzeigbar.

Weiterhin ist erfindungsgemäß eine Eingabevorrichtung vorgesehen, über welche der Bediener die Zuweisung an eine andere Person, die Annahme und/oder die Ablehnung einer auf den Informationen basierenden Aufgabe und/oder eine Ergänzung von Informationen vornehmen kann. Mit anderen Worten kann der Bediener auf die Informationen, insbesondere auf die Aufgaben reagieren, wobei er eine begrenzte Auswahl an Reaktionsmöglichkeiten hat. So kann der die Aufgabe annehmen oder ablehnen. Das bedeutet, dass er über die Eingabevorrichtung mitteilt, ob er die Aufgabe durchführen will oder nicht. Weiterhin kann er die Aufgabe einer weiteren Person zuweisen, beispielsweise, falls der Bediener bereits weitere Aufgaben zu erledigen hat. Eine weitere Möglichkeit ist, dass der Bediener zu den Informationen Ergänzungen vornehmen kann, welche dann in der Speichereinrichtung speicherbar sind. Diese Möglichkeit kann vorteilhaft sein, um beispielsweise eine Begründung für die Ablehnung angeben zu können. Als Eingabegeräte sind Tastaturen, Computermäuse, andere Zeigegeräte und/oder ein Touchscreen denkbar. Insbesondere kann ein Touchscreen Teil eines mobilen Endgeräts sein wie etwa ein Smartphone oder ein Tablet-Computer.

Um die Eingaben des Bedieners auch speichern zu können, ist bevorzugt eine Speichereinrichtung vorgesehen. Diese kann identisch mit der bereits beschriebenen Speichereinrichtung zur Speicherung von Informationen zu Ereignissen sein.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Druckmaschine und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: schematische Darstellung einer erfindungsgemäßen Verpackungsanlage
- Fig. 2: Funktionsdarstellung eines Datenfilters einer erfindungsgemäßen Verpackungsanlage
- Fig. 3: Bildschirmdarstellung einer Vorrichtung der erfindungsgemäßen Verpackungsanlage

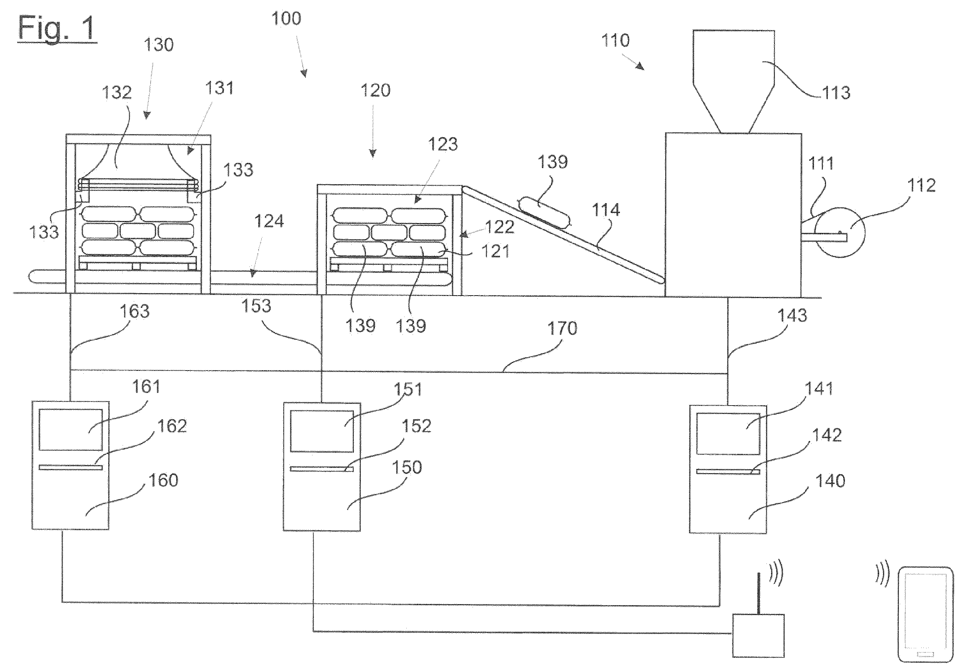

Die **Figur 1** zeigt eine schematische Darstellung einer erfindungsgemäßen Verpackungsanlage 100, die eine Absackanlage 110, eine Palettiervorrichtung 120 und eine Ladungssicherungsvorrichtung 130. Die Absackanlage 110 ist mit einem schlauchförmigen Verpackungsmittel 111, das auf einer Rolle 112 gespeichert ist, versorgt. Dieses Verpackungsmittel 111 wird von der Rolle 112 abgezogen. Das vordere Ende dieses Verpackungsmittels 111 wird mit einer Bodennaht versehen und nach einer Sacklänge abgetrennt, so dass ein oben offener Sack entsteht. Dieser wird an seinem oberen Ende durch Greiferpaare ergriffen und zu einer Füllstation transportiert. Dort wird das obere Ende aufgezogen, so dass das Innere des Sackes zugänglich ist. Nun kann der Sack mit dem abzusackenden Produkt, welches frei fließend ist, aber aus einem Feststoff besteht (also nicht flüssig) in der gewünschten Menge, beispielsweise 25 kg, befüllt werden. Das Produkt ist dabei in einem Silo 113 gespeichert und wird von dort abgezogen. Anschließend wird der noch offene, aber schon befüllte Sack zu einer Schließstation verbracht, wo eine den Sack verschließende Kopfnaht angebracht wird, in der Regel im Schweißverfahren.

Die befüllten Säcke 139 werden nun mit einer Transporteinrichtung 114, die mehrere Förderbänder umfassen kann, zur Palettiervorrichtung 120 transportiert. Dort werden mehrere Säcke 139 oberhalb einer Palette 121 gesammelt und angeordnet. Diese Anordnung von Säcken wird auf die Palette abgelegt und bildet dort eine Sacklage 122. In jeder Sacklage sind die Säcke in der Regel gegenüber der vorherigen Sacklage variierend angeordnet, um so die Stabilität des Sackstapels 123 zu erhöhen.

Die fertig bepackte Palette 121 wird nun über eine Fördereinrichtung 124 zur Ladungssicherungsvorrichtung 130 verbracht, wo die bepackte Palette mit einem Überzug, einer so genannten Stretchhaube 131 versehen wird. Dazu sind an jeder Ecke, aber oberhalb der bepackten Palette jeweils ein Refffinger 133 angeordnet, auf den ein Folienschlauch 132 mit einer gewissen Länge gespeichert wird. Anschließend bewegen sich die Refffinger diagonal nach außen, so dass sie sich in horizontaler Richtung gesehen außerhalb der Abmaße der Palette befinden. Dabei wird der Folienschlauch 132 gedehnt. Nun können sich die Refffinger abwärts bewegen und geben dabei sukzessive den Folienschlauch ab, so dass sich eine glatte Haube über der bepackten Palette ergibt. Vor oder während der Abwärtsbewegung der Refffinger wird der Folienschlauch 132 entsprechend der benötigten Länge abgetrennt und mit einer Schweißnaht verschlossen, so dass die Haube 131 oben geschlossen ist. Die Stretchhaube hat nicht nur die Aufgabe, die Säcke während eines Transports sicher auf der Palette zu halten, sondern kann auch dem Schutz vor Umwelteinflüssen, wie etwa vor Feuchtigkeit, dienen.

Jede der genannten Vorrichtungen 110, 120, 130 umfasst in diesem Ausführungsbeispiel eine Bedien- und Informationseinrichtung 140, 150, 160, die jeweils Informationen zu Ereignissen in der jeweiligen Vorrichtung speichert und bereitstellt. Dazu kann die Bedien- und Informationseinrichtung eine Recheneinrichtung und wenigstens einen Massenspeicherbaustein, beispielsweise in Form eine Festplatte auf magnetischer Basis und/oder einen Solid-State-Drive (Halbleiterlaufwerk), umfassen. In diesem Speicherbaustein lassen sich nun zu verschiedenen, aber festgelegten Ereignissen Informationen speichern. Einige dieser Ereignisse, beispielsweise "Herstellung eines befüllten Sacks oder Beutels", erfolgen fortwährend, während andere Ereignisse unregelmäßig stattfinden können. Dennoch erfolgt zu all diesen Ereignissen die Speicherung der zugehörigen Informationen.

Die Bedien- und Informationseinrichtung 140, 150, 160 kann jeweils auch einen Bildschirm 141, 151, 161 umfassen, auf welchen sich Ansichten anzeigen lassen, die verschiedene der gespeicherten Informationen umfassen. Weiterhin kann eine Eingabevorrichtung 142, 152, 162 vorgesehen sein, mit welcher sich beispielsweise Befehle eingeben lassen, die zu den genannten Ansichten führen. Datenleitungen 143, 153, 163 führen von verschiedenen Bauelementen der Vorrichtungen zur Bedien- und Informationseinrichtung 140, 150, 160.

Weiterhin ist eine die Vorrichtungen und auch die Bedien- und Informationseinrichtungen vernetzende Datenleitung 170 gezeigt. Damit ist es möglich, von einer der Bedien- und Informationseinrichtungen 140, 150, 160 auf alle anderen Bedien- und Informationseinrichtungen 140, 150, 160 beziehungsweise auf die Vorrichtungen 110, 120, 130 zuzugreifen.

Von den Bedien- und Informationseinrichtungen 140, 150, 160 führen weitere Datenleitungen 180 zu einem Datenprovider 181, dessen Aufgabe es ist, die Informationen für weitere Geräte zur Verfügung zu stellen. Dazu steht der Datenprovider 181 in Datenkontakt mit den Bedien- und Informationseinrichtungen 140, 150, 160, so dass der Datenprovider die Informationen sammeln, ggf. umformatieren und zumindest einem Endgerät zur Verfügung stellen kann. Der Datenprovider 181 kann auch mit einem oder zwei der Bedien- und Informationseinrichtungen 140, 150, 160 verbunden oder in dieser integriert sein, wobei dann dieser Bedien- und Informationseinrichtung über die Datenleitung die Informationen aus den anderen Bedien- und Informationseinrichtungen übermittelbar sind.

Im vorliegenden Ausführungsbeispiel sendet der Datenprovider 181 über eine Antenne 182 die Daten drahtlos an ein Endgerät, hier ein Smartphone 183.

Die Eingabevorrichtungen 142, 152, 162 sowie das Smartphone 183 sind dazu nutzbar, um dem Bediener die Eingabe einer Reaktion auf die Aufgaben, welche durch die Bedien- und Informationseinrichtungen 140, 150, 160 oder das Smartphone 183 darstellbar sind, zu ermöglichen. Diese Eingaben sind ebenfalls in den Bedien- und Informationseinrichtungen 140, 150, 160 speicherbar.

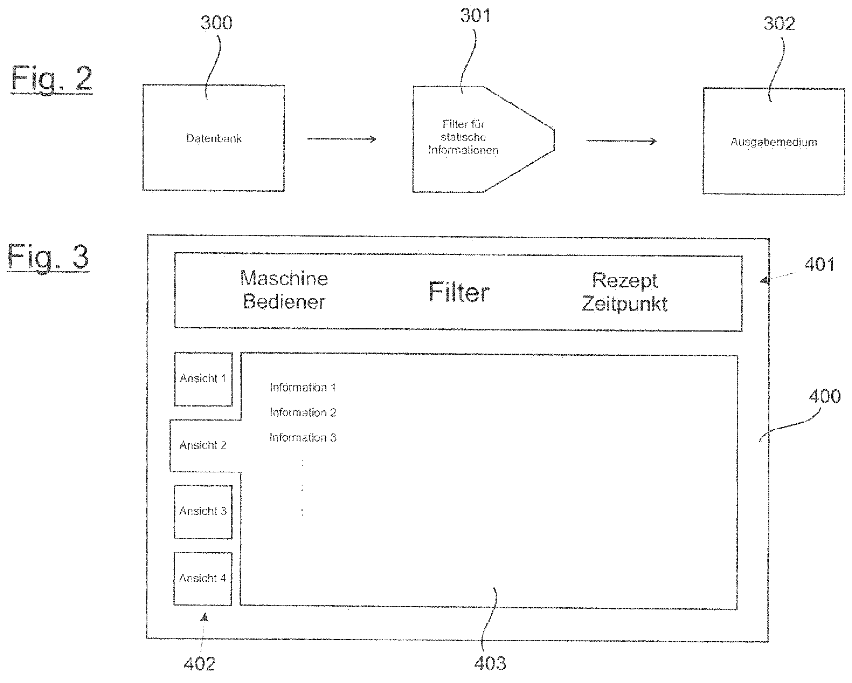

Die **Figur 2** zeigt eine Funktionsdarstellung eines Datenfilters einer erfindungsgemäßen Verpackungsanlage. Dargestellt ist eine Datenbank, welche eine softwaretechnische Verknüpfung von Ereignissen und den zugehörigen Informationen bereitstellt sowie die Speicherung in den Speicherbausteinen organisiert. Zudem stellt die Datenbank die Informationen auch bei Abfragen zur Verfügung.

Bei einer speziellen Datenabfrage lassen sich nun in der dargestellten Ausführungsform Daten abfragen, wobei sich lediglich Suchkriterien bzw. Suchbereiche für die statischen Informationen zugelassen sind. So kann beispielsweise der Benutzer, das Rezept, der Zeitpunkt und die Maschine für die Datenabfrage festgelegt werden. Es kann beispielsweise nach allen Informationen gesucht werden, die zu Ereignissen gehören, die innerhalb der letzten 24 Stunden eingetreten sind. Eine entsprechende Datenabfrage in den dynamischen Informationen ist nicht vorgesehen. Die Datenabfrage ist in der Figur 3 als Filter 301 dargestellt. Die Datenabfrage ist anschließend durch ein Ausgabemedium 302, beispielsweise einem Bildschirm, dem Benutzer mitteilbar. Die genannte Datenabfrage kann auch vom Endgerät aus organisiert werden. Dazu wird vom Endgerät aus die Datenabfrage über den Datenprovider zumindest einer der Bedien- und Informationseinrichtungen übermittelt, in welche vorteilhafterweise die Informationen ermittelt werden. Diese werden dann wiederum über den Datenprovider dem Endgerät zwecks Darstellung übermittelt. In dieser Darstellung lassen sich in einer weiteren Ansic

Die Figur 3 zeigt eine Ausführungsform für eine Darstellung der Ergebnisse einer Datenabfrage auf einem Bildschirm 400 einer der Bedien- und Informationssysteme oder auf einem Endgerät, das sich erfindungsgemäß außerhalb der Verpackungsanlage befindet. In einem Darstellungsbereich 401 ist der Filter dargestellt, d. h., der Schriftzug "Filter" steht für den Filternamen. Unter diesem Filternamen kann der Filter mit den entsprechenden Suchkriterien abgespeichert sein oder werden. In dem Darstellungsbereich 402 sind nun alle Ereignisse angezeigt oder alle Ereignisse angezeigt, deren statische Informationen den Suchkriterien entsprechen. Das angezeigte Ereignis ist in der Figur 4 als Ansicht 1, Ansicht 2 usw. dargestellt. Eine der Ansichten ist nun auswählbar, wobei alle statischen und/oder dynamischen Informationen zu dem ausgewählten Ereignis anzeigbar sind. Hierzu steht der Darstellungsbereich 403 zur Verfügung. In dieser Darstellung lassen sich in einer weiteren Ansicht, etwa im Darstellungsbereich 402, auch zukünftige Ereignisse anzeigen, also solche Ereignisse, zu denen von einer Recheneinrichtung Informationen, insbesondere der Zeitpunkt des Auftretens, vorausberechnet wurden. In einer weiteren, nicht dargestellten Ansicht, hat der Bediener die Möglichkeit, auf die Informationen zu reagieren, wobei der über die Eingabevorrichtungen 142, 152, 162 und/oder das Smartphone 183 Eingaben in die entsprechenden Felder tätigen kann.

| **Bezugszeichenliste** | |
|---|---|
| 100 | Verpackungsanlage |
| 110 | Absackanlage |
| 111 | Verpackungsmittel |
| 112 | Rolle |
| 113 | Silo |
| 114 | Transporteinrichtung |
| 120 | Palettiervorrichtung |
| 121 | Palette |
| 122 | Sacklage |
| 123 | Sackstapel |
| 124 | Fördereinrichtung |
| 130 | Ladungssicherungsvorrichtung |
| 131 | Stretchhaube |
| 132 | Folienschlauch |
| 133 | Refffinger |
| 139 | Befüllte Säcke |
| 140, 150, 160 | Bedien- und Informationseinrichtung |
| 141, 151, 161 | Bildschirm |
| 142, 152, 162 | Eingabevorrichtung |
| 170 | Datenleitung |
| 180 | Datenleitung |
| 181 | Datenprovider |
| 182 | Antenne |
| 183 | Smartphone |
| 301 | Filter |
| 302 | Ausgabemedium |
| 400 | Bildschirm |
| 401 | Darstellungsbereich |
| 402 | Darstellungsbereich |
| 403 | Darstellungsbereich |

## Patentansprüche

1. Verpackungsanlage zum Verpacken eines Produkts mit wenigstens einer der folgenden Vorrichtungen:
- Absackvorrichtung
- Palettiervorrichtung
- Palettensicherungsvorrichtung
wobei eine Einrichtung zum Bestimmen und Bereitstellen von Informationen zu zukünftigen Ereignissen vorgesehen ist.

2. Verpackungsanlage nach Anspruch 1
**dadurch gekennzeichnet, dass**
die zukünftigen Ereignisse Aufgaben sind, die zumindest ein Bediener der Vorrichtung zu erledigen hat.

3. Verpackungsanlage nach einem der vorstehenden Ansprüche
**dadurch gekennzeichnet, dass**
eine Anzeigevorrichtung vorgesehen ist, mit welcher dem Bediener die Informationen zu zukünftigen Ereignisse übermittelbar sind.

4. Verpackungsanlage nach einem der vorstehenden Ansprüche
**dadurch gekennzeichnet, dass**
eine Eingabevorrichtung vorgesehen ist, über welche der Bediener die Zuweisung an eine andere Person, die Annahme und/oder die Ablehnung einer auf den Informationen basierenden Aufgabe und/oder eine Ergänzung von Informationen vornehmen kann.

5. Verpackungsanlage nach einem der vorstehenden Ansprüche
**dadurch gekennzeichnet, dass**
eine Speichereinrichtung vorgesehen ist, mit welcher Eingaben des Bedieners speicherbar sind.

6. Verfahren zum Verpacken eines schüttfähigen Produkts,
mit zumindest einem der folgenden Schritte:
- Absacken des Produkts in Säcke oder Beutel
- Palettieren mehrerer Säcke oder Beutel
Sichern der auf der Palette aufgestapelten Säcke oder Beutel
wobei mit einer Einrichtung zum Bestimmen und Bereitstellen von Informationen zu zukünftigen Ereignissen diese Informationen bestimmt und bereitgestellt werden.
